# EUROPÄISCHE PATENTSCHRIFT

(11) **EP 3 268 197 B1**
(45) Veröffentlichungstag und Bekanntmachung des Hinweises auf die Patenterteilung: **23.08.2023**
(21) Anmeldenummer: 16708680.0
(22) Anmeldetag: 09.03.2016
(51) Int. Cl.: B29B 11/16, B29D 99/00, B29C 70/32, B29C 33/68, B29C 70/54, B29L 31/08

(54) **VERFAHREN ZUM HERSTELLEN EINES VORFORMLINGS**
METHOD FOR PRODUCING A PREFORM
PROCÉDÉ POUR LA FABRICATION D'UNE PRÉFORME

(30) Priorität: 12.03.2015 DE 102015204490
(43) Veröffentlichungstag der Anmeldung: 17.01.2018
(73) Patentinhaber: Wobben Properties GmbH, 26607 Aurich (DE)
(72) Erfinder: HOFFMANN, Alexander, 26721 Emden (DE); FRIEDE, Peter, 26624 Südbrookmerland (DE); THEILE, Benjamin, 94036 Passau (DE)
(74) Vertreter: Eisenführ Speiser
(86) Internationale Anmeldenummer: PCT/EP2016/054965
(87) Internationale Veröffentlichungsnummer: WO 2016/142402

(56) Entgegenhaltungen:
- WO-A1-2011/058827
- WO-A1-2012/042261

## Beschreibung

Die vorliegende Erfindung betrifft ein Verfahren zum Herstellen eines Windenergieanlagen-Rotorblatts.

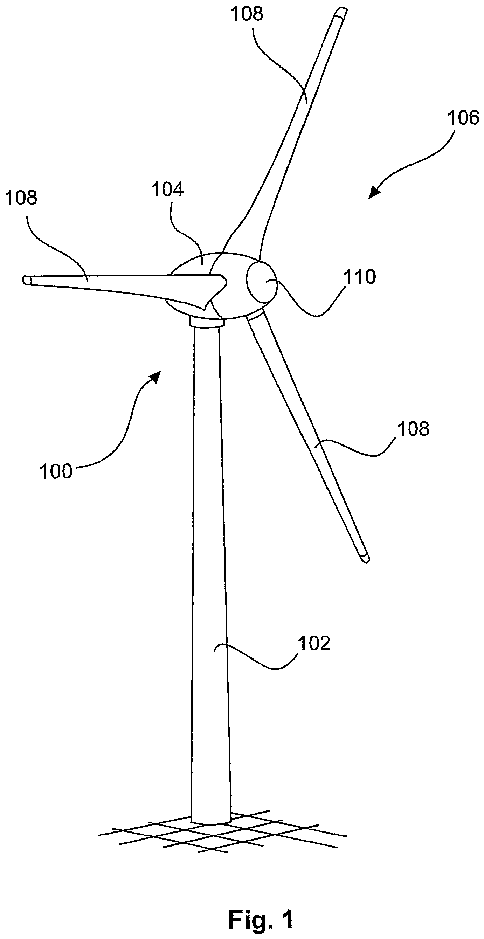

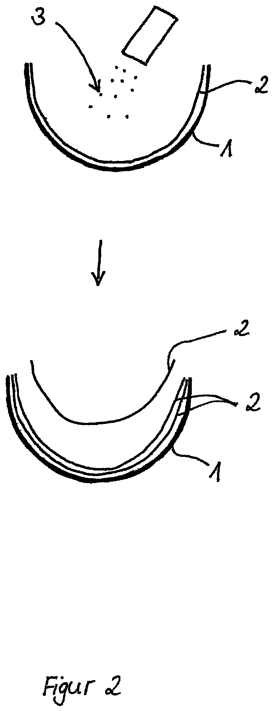

Windenergieanlagen zur Nutzung zur Stromerzeugung sind allgemein bekannt und beispielsweise wie in Figur 1 ausgestaltet. Üblicherweise werden die Rotorblätter einer solchen Windenergieanlage größtenteils aus Faserverbundwerkstoffen hergestellt. Dafür werden endkonturnahe Vorformlinge verwendet, die im Folgenden auch als Preforms bezeichnet werden. Der Vorformling bzw. die Preform haben einen großen Einfluss auf die Produktionskette von den Ausgangswerkstoffen bis hin zum fertigen Rotorblatt. Die Preform soll dabei möglichst gut die Geometrie des Rotorblattes abbilden. Allgemein ist bekannt, eine solche Preform bzw. einen solchen Vorformling in einer Halbschale mit einem manuellen Verfahren herzustellen. Ein solches manuelles Verfahren ist beispielsweise in Fig. 2 dargestellt.

Fig. 2 zeigt eine Form 1, in die ein textiles Halbzeug 2 eingelegt ist. Das textile Halbzeug 2 wird mit einem Bindemittel bebindert, also leicht verklebt. Anschließend wird eine weitere Lage des textilen Halbzeugs 2 auf die mit dem Bindemittel versehene erste Lage drapiert. Die zweite Lage wird dann ebenfalls behindert. Dies wird so oft wiederholt, bis die notwendige Anzahl an Lagen erreicht ist. Die Form 1 ist dabei als Halbschale ausgeführt. Um ein Rotorblatt herzustellen, müssen somit zudem wenigstens zwei Halbschalen pro Rotorblatt verwendet werden. Ein solches Verfahren ist dabei sehr zeitaufwändig und das Bebindern des textilen Halbzeugs ist Qualitätsschwankungen unterworfen. Zudem wird die Faserorientierung des textilen Halbzeugs oft durch Falten während des Drapiervorganges gestört, so dass die vorherbestimmten mechanischen Eigenschaften in der Preform nicht eingehalten werden können.

In der prioritätsbegründenden deutschen Patentanmeldung hat das Deutsche Patent- und Markenamt die folgenden Dokumente recherchiert: US 2007/0 125 488 A1; GB 2 485 248 A; US 4 247 258 A; US 4 273 601 A; DE 102 51 580 A1; DE 10 2007 049 347 A1; JPS54-159 476 A; EP 2 319 682 B1 und WO 2013/ 091 635 A1.

WO 2012/042261 A1 offenbart ein Verfahren zum Herstellen eines Windenergieanlagen-Rotorblattes.

Der Erfindung liegt somit die Aufgabe zugrunde, wenigstens eines der genannten Probleme zu adressieren. Insbesondere soll eine Lösung geschaffen werden, die eine einfache Herstellung eines Rotorblatts einer Windenergieanlage bei gleichzeitig guter Qualität und geringem Zeitaufwand gewährleistet. Zumindest soll eine alternative Lösung vorgeschlagen werden.

Diese Aufgabe wird durch das Verfahren zum Herstellen eines Windenergieanlagen-Rotorblatts nach Anspruch 1 gelöst.

Zur Lösung der Aufgabe wird erfindungsgemäß ein Verfahren zum Herstellen eines Rotorblatts einer Windenergieanlage vorgeschlagen. Das Verfahren umfasst dabei die Schritte: Bereitstellen wenigstens eines trockenen textilen Halbzeugs auf wenigstens einer Rolle, Aufbringen eines Bindemittels auf das textile Halbzeug und/oder Erwärmen des textilen Halbzeugs, Drapieren des wenigstens einen textilen Halbzeugs von der wenigstens einen Rolle auf einen Kern und Aushärten des textilen Halbzeugs nach dem Drapieren auf dem Kern. Dabei wird das Drapieren mittels einer Rotation des Kerns durchgeführt. Der Vorformling wird mittig getrennt, um zwei ausgehärtete Vorformling-Halbschalen zu erhalten, und bei der Herstellung eines Rotorblattes einer Windenergieanlage verwendet.

Unter einem textilen Halbzeug werden vorliegend insbesondere flächige Halbzeuge wie beispielsweise Gelege, Gewebe oder Geflechte sowie 3D-Halbzeuge wie 3D-Gewebe oder Multiaxial-Gelege verstanden. Insbesondere werden für das erfindungsgemäße Verfahren Glasfaser-Gelege verwendet. Diese textilen Halbzeuge werden auf einer Rolle als fertige Bahnware bereit gestellt.

Das textile Halbzeug ist dabei vorzugsweise trocken, also ohne dass eine Matrix in das Halbzeug eingebracht ist und nur aus den entsprechend verarbeiteten Fasern bestehend. Ein trockenes textiles Halbzeug ist gemäß der Erfindung ein textiles Halbzeug, das nicht mit Harz durchtränkt ist. d. h. das trockene textile Halbzeug ist harzundurchtränkt. Optional kann das trockene textile Halbzeug Binder aufweisen. Das textile Halbzeug kann optional ein Prepreg darstellen.

Zudem ist dieses textile Halbzeug entweder bereits auf der Rolle mit einem Bindemittel benetzt oder das Bindemittel wird in einem Zwischenschritt zwischen dem Abrollen des textilen Halbzeugs von der Rolle und dem Drapieren des textilen Halbzeugs auf den Kern aufgebracht. Das Bindemittel soll dabei dazu beitragen, dass die Geometrie und der Zusammenhalt der einzelnen Lagen auf dem Kern fixiert werden. Hierzu wird das Bindemittel entweder direkt als Haftvermittler aufgetragen und/oder es wird mittels einer Wärmequelle erwärmt. Dieses ist dann so lange klebfähig, bis es wieder abgekühlt ist und die dann aufgebaute Haftverbindung zu anderen Lagen behält. Dadurch entsteht eine Preform, die ausreichend stabil ist für die nachfolgenden Arbeitsschritte wie z. B. bei einem trockenen textilen Halbzeug das Anbringen von Infusionswerkzeugen zum Einleiten von Harz in das trockene Halbzeug.

Nachdem das textile Halbzeug auf den Kern drapiert bzw. aufgewickelt ist, wird bei einem trockenen Halbzeug ein Harz infundiert und anschließend ausgehärtet. Das Bindemittel muss dabei nicht aushärten. Es kann zum Auftragen über die Schmelztemperatur erhitzt werden und erstarrt nach Abkühlung unter die Schmelztemperatur.

Damit das Halbzeug auf den Kern gelangt, rotiert der Kern, insbesondere über einen motorischen Antrieb. Durch diese Verfahren ist es möglich eine gleichmäßige Benetzung des textilen Halbzeugs mit einem Bindemittel zu ermöglichen, wodurch Qualitätsschwankungen vermieden werden. Zudem wird durch die Rotation des Kerns das textile Halbzeug automatisch auf dem Kern drapiert, so dass das Verfahren weniger zeitaufwändig ist als ein entsprechendes manuelles Verfahren. Zudem wird somit eine einfache, also wenig aufwändige Herstellung eines solchen Vorformlings gewährleistet.

Vorzugsweise weist das textile Halbzeug eine erste, von dem Kern abgewandte Seite und eine zweite, zu dem Kern weisende Seite auf und die erste Seite und/oder die zweite Seite wird zwischen der Rolle und dem Kern mit dem Bindemittel benetzt. Das Halbzeug wird also automatisch während des Ablegens des Halbzeugs auf den Kern mit einem Bindemittel benetzt oder behindert. Insbesondere wird auf das Halbzeug von oben, also auf die erste Seite, oder von unten, also auf die zweite Seite, Bindemittel aufgetragen und/oder gesprüht, so dass das Bindemittel gleichmäßig auf dem Halbzeug verteilt wird. Dies hat den Vorteil, dass die benötigte Zeit für diesen Herstellungsprozess reduziert wird und ein besonders gleichmäßiges Bebindern des Halbzeugs und somit eine gleichmäßige Haftverbindung zwischen den einzelnen Lagen erzielt wird.

Vorzugsweise erfolgt das Aufbringen des Bindemittels vor dem Bereitstellen des textilen Halbzeugs. Das auf der Rolle aufgerollte textile Halbzeug ist also mit einem Bindemittel versehen. Durch das Weglassen des Schrittes des Bebinderns während Drapierens des textilen Halbzeugs auf den Kern, wird Zeit bei der Herstellung des Vorformlings gespart.

Dadurch wird die Gesamtdauer der Herstellung des Rotorblatts reduziert.

In einer bevorzugten Ausführungsform wird auf das textile Halbzeug beim Drapieren auf den Kern eine Andruckkraft aufgebracht. Die Andruckkraft kann dabei beispielsweise durch eine Andrückrolle oder eine Walze, die in eine zu dem Kern entgegengesetzte Richtung rotiert und über die gesamte Länge des Kerns vorgesehen ist, erzeugt werden. Durch die Andruckkraft wird die Haftverbindung zwischen den einzelnen Lagen des textilen Halbzeugs verstärkt und somit ein stabiler Vorformling gewährleistet.

Erfindungsgemäß wird der Vorformling nach dem Aushärten mittig getrennt. Der Vorformling wird also durch die Mitte gehend geteilt, so dass zwei Preformen entstehen. Insbesondere wird der Vorformling in der Mitte mittels einer Säge getrennt. Durch dieses Verfahren wird eine hohe Zeitersparnis gegenüber einem manuellen Verfahren erzielt, in dem die beiden Preformen einzeln hergestellt werden müssen. Die beiden Preformen werden zur Herstellung eines Windenergieanlagen-Rotorblattes verwendet.

In einer bevorzugten Ausführungsform wird das Drapieren des wenigstens einen textilen Halbzeugs mittels einer Bewegung zu einer Längsachse des Kerns durchgeführt. Das textile Halbzeug wird demnach der Länge nach über und/oder seitlich zu dem Kern auf der Rolle entlang geführt. Die Rollen mit dem textilen Halbzeug bewegen sich dabei insbesondere mit einer der Rotationsgeschwindigkeit entsprechenden Geschwindigkeit von einem ersten Ende des Kerns zu einem zweiten Ende des Kerns. Dadurch wird ein gleichmäßiges Aufbringen des textilen Halbzeugs auf den Kern sichergestellt. Zudem kann dadurch eine Rolle in einer handhabbaren Größe verwendet werden.

Vorzugsweise umfasst das Verfahren den weiteren Schritt des Anordnens wenigstens eines Trennelements zum Erzeugen einer Hinterschneidung an einer vorgesehenen Trennstelle des Vorformlings vor dem Drapieren des textilen Halbzeugs. Ein solches Trennelement ist dabei beispielsweise als Teil des Kerns ausgebildet oder als separates Element an dem Kern angeordnet. Das Trennelement ist insbesondere als nonpermanenter Kern ausgeführt, es ist also nach dem letzten Schritt des Herstellungsverfahrens nicht mehr vorhanden. Dabei ist das Trennelement insbesondere aus Sand, Wachs oder einer aufgeblasenen Folie hergestellt. Alternativ ist das Trennelement aus Kunststoff oder Holz ausgeführt. Das Trennelement ist dabei an der Trennstelle so angeordnet, dass dort eine Hinterschneidung entsteht und somit das Trennen des Vorformlings in zwei Halbschalen erleichtert wird. Verbleibt das Trennelement am Kern oder ist es austauschbar an dem Kern angeordnet, so wird der Kern beim Trennen durch eine Säge oder ähnliches nicht beschädigt. Er kann demnach für einen weiteren Herstellungsprozess verwendet werden.

In einer bevorzugten Ausführungsform ist vor dem Drapieren des textilen Halbzeugs von der Rolle auf den Kern eine Trennfolie, insbesondere eine Hostaphanfolie, auf den Kern angeordnet. Die Hostaphanfolie fungiert dabei als Trennmittel. Dadurch lassen sich die hergestellten Vorformlinge nach dem Aushärten bzw. Erstarren des Bindemittels leichter von dem Kern lösen.

In einer besonders bevorzugten Ausführungsform ist der Kern als ein ovaler, länglicher Körper ausgeführt und wird durch einen Motor bewegt. Dies hat den Vorteil, dass der Kern durch eine einfache Konstruktion realisiert wird. Der Motor versetzt den Kern in eine Rotation und stellt dadurch eine vorbestimmte Vorschubkraft zum Aufwickeln des textilen Halbzeugs auf den Kern bereit. Die Drehzahl des Motors ist dabei einstellbar. Ein besonders gleichmäßiges Aufwickeln des textilen Halbzeugs auf den Kern wird dadurch gewährleistet.

Der ovale längliche Körper bildet dabei eine mit Hilfe des fertigen Vorformlings herzustellende Oberfläche eines Rotorblatts oder Rotorblattelements. Durch den gleichmäßig erzeugten Vorformling ist ein reibungsloser Ablauf der weiteren Arbeitsschritte zur Herstellung des Rotorblatts oder Rotorblattelements gewährleistet. Die gesamte Prozesszeit ist verkürzt.

Vorzugsweise werden in dem Verfahren 2 bis 30 Rollen, insbesondere 2 bis 4 Rollen verwendet und/oder wenigstens zwei textile Halbzeuge auf zwei Rollen weisen eine unterschiedliche Faserorientierung auf und/oder wenigstens zwei textile Halbzeuge werden in wenigsten einer unterschiedlichen Faserorientierung drapiert. Eine solche Rolle weist dabei ein Gewicht von wenigstens 500 kg auf. Durch die Verwendung mehrerer Rollen ist es möglich, verschiedene textile Halbzeuge zu verwenden und somit eine optimale Nutzung der verschiedenen Eigenschaften unterschiedlicher Verbundwerkstoffe zu verwenden. Insbesondere eine unterschiedliche Faserorientierung der verschiedenen textilen Halbzeuge kann durch die Verwendung mehrerer Rollen realisiert werden. Entweder weisen dabei die fertigen Bahnwaren bereits auf der Rolle unterschiedliche Faserorientierungen auf oder die Rollen werden so angeordnet, dass die Halbzeuge in einem unterschiedlichen Winkel auf den Kern aufgebracht werden und somit entsprechend mit unterschiedlichen Faserorientierungen auf den Kern gewickelt werden. Zudem kann dadurch leicht ein Rollenwechsel vorgenommen werden.

In einer bevorzugten Ausführungsform dreht sich der Kern in weniger als 25 Sekunden ein Mal um seine Längsachse, insbesondere in 9 Sekunden. Dadurch wird eine erste Lage insbesondere in 9 Sekunden auf den Kern aufgebracht. In dieser Zeit erhalten die einzelnen Lagen einen ausreichend guten Zusammenhalt untereinander. Insbesondere bei sehr vielen Lagen ist die Zeitersparnis gegenüber einem manuellen Verfahren besonders groß. Dies ist besonders vorteilhaft in Bereichen, in denen viele Lagen verwendet werden müssen, wie beispielsweise im Bereich der Rotorblattwurzel, in dem wenigstens 40 Lagen benötigt werden. Da das textile Halbzeug trocken drapiert wird, kann der Kern sich schneller drehen (als bei einem nassen Halbzeug).

Zudem wird ein Vorformling für ein Rotorblatt einer Windenergieanlage vorgeschlagen. Der Vorformling ist dabei gemäß einem Verfahren der vorstehenden Ausführungsform hergestellt. Ein solcher Vorformling hat dabei den Vorteil, dass er in großen Größen, wie es für ein Rotorblatt einer Windenergieanlage notwendig ist, hergestellt werden kann. Zudem unterliegt er durch das vorab beschriebene Verfahren kaum Qualitätsschwankungen und zeichnet sich daher durch seine besonders hohe Qualität aus. Durch die Verwendung eines solchen Vorformlings wird die Dauer der gesamten Prozesskette bei der Herstellung eines Rotorblatts einer Windenergieanlage reduziert. Vorzugsweise ist der Vorformling aus wenigstens einem Gelege, insbesondere einem Glasfaser-Gelege, hergestellt. Dadurch sind Faserorientierungen in weiten Bereichen einstellbar und es können auch Matten oder Vliese mit eingewirkt werden. Gegenüber einem Gewebe hat ein Gelege zudem eine erhöhte Festigkeit. Ein Glasfaser-Gelege ist dabei günstig in der Herstellung.

Weiterhin wird eine Vorrichtung zum Herstellen eines Vorformlings für ein Rotorblatt einer Windenergieanlage vorgeschlagen. Die Vorrichtung umfasst dabei wenigstens eine Rolle, auf der wenigstens ein textiles Halbzeug angeordnet ist, wenigstens einen Kern, auf dem das wenigstens eine textile Halbzeug drapierbar ist, eine Bebinderungseinrichtung zum Benetzen des wenigstens einen textilen Halbzeugs mit einem Bindemittel und/oder eine Wärmequelle zum Erwärmen des wenigstens einen textilen Halbzeugs sowie eine Antriebseinrichtung zum Versetzen des Kerns in eine Rotationsbewegung. Dabei ist das textile Halbzeug durch die Rotationsbewegung des Kerns auf den Kern drapierbar. Die Bebinderungseinrichtung ist dabei insbesondere eine Sprüheinrichtung, durch die das textile Halbzeug mit einem Bindemittel versehen wird. Unter einer Wärmequelle ist insbesondere ein Heizgerät, eine Heizung, ein Ofen oder einer Erwärmungsstrecke mit Infrarot-Heizstrahlern oder Erwärmung durch Konvektion zu verstehen, also eine Einrichtung, die insbesondere das Bindemittel des wenigstens einen textilen Halbzeugs erwärmt und somit die Klebefähigkeit erhöht. Ist das textile Halbzeug bereits auf der Rolle mit einem Bindemittel versehen, ist die Rolle insbesondere vor dem Abwickeln in einem Ofen angeordnet, so dass die einzelnen Lagen des klebefähigen textilen Halbzeugs untereinander gut haften.

Die Vorrichtung ist dabei vorteilhafterweise einfach ausgestaltet, so dass ein Vorformling schnell und kostengünstig hergestellt werden kann. Es ergeben sich somit die Zusammenhänge, Erläuterungen und Vorteile gemäß wenigstens einer Ausführungsform des beschriebenen Verfahrens.

Vorzugsweise ist eine Verfahreinrichtung zum Verfahren der wenigstens einen Rolle in Richtung der Längsachse des Kerns vorgesehen. Das textile Halbzeug wird demnach entlang der Längsachse, also von einem ersten zu einem zweiten Ende des vorzugsweise im Querschnitt ovalen oder runden Kerns bewegt und drapiert. Dadurch wird ein gleichmäßiges und gezieltes Aufbringen des textilen Halbzeugs auf der gesamten Kernoberfläche sichergestellt.

Vorzugsweise ist auf dem Kern eine Trennfolie, insbesondere eine Hostaphanfolie, angeordnet. Dadurch kann der hergestellte Vorformling einfach und unkompliziert von dem Kern abgelöst werden.

In einer bevorzugten Ausführungsform ist an dem Kern an einer vorgesehenen Trennstelle des Vorformlings ein Trennelement zum Erzeugen einer Hinterschneidung vorgesehen. Ein solches Trennelement ist dabei insbesondere aus Kunststoff, Holz, Sand oder Wachs ausgeführt. Dadurch sind die Trennstellen im Vorformling bereits vorgesehen bzw. der Vorformling kann an entsprechender Stelle einfach getrennt werden. Der Kern wird beim Trennen des Vorformlings in zwei Teile nicht beschädigt.

In einer besonders bevorzugten Ausführungsform ist an dem Kern eine Anpressvorrichtung vorgesehen. Eine solche Anpressvorrichtung ist insbesondere als Walze oder Andrückrolle ausgeführt, die über den Kern verläuft. Durch die Anpressvorrichtung wird eine vorbestimmte Andrückkraft auf das Halbzeug während des Wickelns auf den Kern ausgeübt. Dadurch wird die Haltekraft der einzelnen Lagen des Halbzeugs verbessert.

Vorzugsweise sind 2 bis 30 Rollen, insbesondere 2 bis 4 Rollen, vorgesehen und wenigstens zwei der Rollen weisen zwei textile Halbzeuge mit unterschiedlichen Faserorientierungen auf. Dadurch können die speziellen Eigenschaften der textilen Halbzeuge besonders gut genutzt werden.

Zudem wird offenbarungsgemäß eine Windenergieanlage mit einem Turm, einer drehbar an dem Turm gelagerten Gondel, einem drehbar an der Gondel gelagerten Rotor und einer Mehrzahl an dem Rotor befestigter Rotorblätter vorgeschlagen. Von den Rotorblättern ist mindestens eines mit einem Vorformling nach einem der vorgenannten Ausführungsformen hergestellt. Dies hat den Vorteil, dass die gesamte Produktionszeit einer solchen Windenergieanlage reduziert wird.

Nachfolgend wird die Erfindung anhand von Ausführungsbeispielen unter Bezugnahme auf die begleitenden Figuren beispielhaft erläutert. Die Figuren enthalten dabei teilweise vereinfachte, schematische Darstellungen.
- Fig. 1: zeigt eine Windenergieanlage in einer perspektivischen Ansicht,
- Fig. 2: zeigt ein Verfahren gemäß dem Stand der Technik,
- Fig. 3a: zeigt einen ersten Verfahrensschritt eines erfindungsgemäßen Verfahrens,
- Fig. 3b: zeigt einen weiteren ersten Verfahrensschritt eines erfindungsgemäßen Verfahrens,
- Fig. 3c: zeigt einen zweiten Verfahrensschritt gemäß einem der Verfahren nach Fig. 3a oder Fig. 3b,
- Fig. 3d: zeigt zwei fertige Vorformlinge für ein Rotorblatt hergestellt gemäß einem Verfahren nach den Fig. 3a oder 3b und 3c, und
- Fig. 4: zeigt eine schematische Schnittansicht eines WindenergieanlagenRotorblattes gemäß der Erfindung.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator in der Gondel 104 an.

Fig. 2 zeigt einen Verfahrensschritt zum Herstellen einer Preform oder eines Vorformlings eines Rotorblatts einer Windenergieanlage gemäß dem Stand der Technik. Dabei ist eine Form 1 zu erkennen, in der ein textiles Halbzeug 2 eingelegt ist und mit einem Bindemittel behindert wird. Dies wird so oft wiederholt, bis eine ausreichende Anzahl an Lagen des textilen Halbzeugs 2 in der Form 1 angeordnet ist. Die Form 1 ist dabei als Halbschale ausgeführt. Um ein komplettes Rotorblatt mit diesem Verfahren herzustellen, sind demnach wenigstens zwei Halbschalen pro Rotorblatt notwendig. Ein solches Verfahren ist demnach sehr zeitaufwändig. Zudem ist das Verfahren durch das manuelle Drapieren der einzelnen Lagen Qualitätsschwankungen unterworfen.

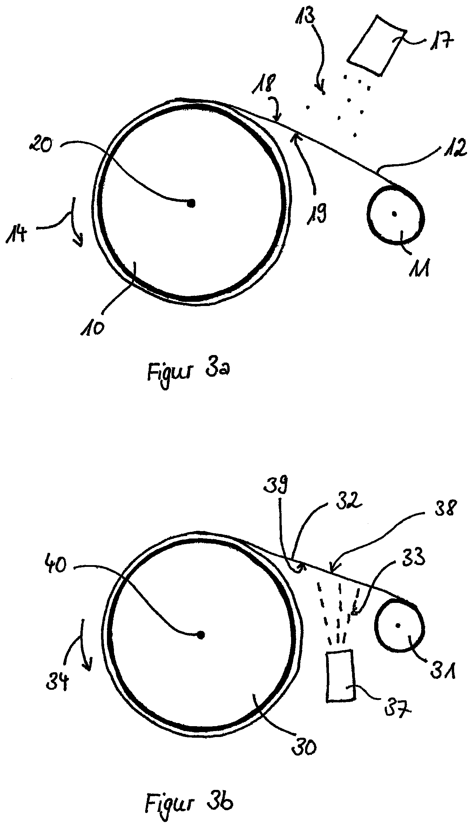

Fig. 3a zeigt einen ersten Verfahrensschritt eines erfindungsgemäßen Verfahrens. In Fig. 3a ist ein Kern 10 sowie eine Rolle 11 zu erkennen, auf der als ein Ausführungsbeispiel eines trockenen textilen Halbzeugs ein Gelege 12 aus Fasermaterial, vorzugsweise aus Glasfasern, aufgerollt ist. Das Gelege 12 weist eine erste Seite 18 und eine zweite Seite 19 auf. Auf der Rolle 11 ist es noch nicht mit einem Bindemittel versehen. Zwischen dem Kern 10 und der Rolle 11 ist eine Bebinderungseinrichtung 17 angeordnet. Der Kern 10 ist in Richtung des Pfeils 14 rotierbar um seine Längsachse 20 angeordnet, vorzugsweise über einen Motor. Dadurch wird das Gelege 12 automatisch von der Rolle 11 ab- und auf den Kern 10 aufgewickelt.

In Fig. 3a ist das Gelege 12 bereits teilweise auf den Kern 10 aufgerollt. Während des Aufrollvorganges des Geleges 12 auf den Kern 10 wird das Gelege 12 mit einem Bindemittel 13 behindert. Dabei wird das Gelege 12 auf der ersten, von dem Kern 10 abgewandten Seite 18 mit dem Bindemittel 13 benetzt. Auf der zweiten Seite 19, die zum Kern 10 gerichtet ist, wird kein Bindemittel vorgesehen. Durch diese Behinderung wird das Gelege 12 fixiert. Unerwünschte Falten in der herzustellenden Preform werden dadurch vermieden. Die so hergestellte Preform ist stabil und entsprechend für die weiteren Arbeitsschritte vorbereitet.

Fig. 3b zeigt eine weitere Ausführungsform eines ersten Verfahrensschritts eines erfindungsgemäßen Verfahrens. Auch in Fig. 3b ist ein Kern 30 zu erkennen, auf den teilweise als ein Ausführungsbeispiel eines textilen Halbzeugs ein Gelege 32 mit einer ersten Seite 38 und einer zweiten Seite 39 aufgerollt ist. Das Gelege 32 wird von einer Rolle 31 auf den Kern 30 aufgerollt. Der Kern 30 rotiert dabei um seine Längsachse 40 in Richtung des Pfeils 34. Im Unterscheid zu Fig. 3a wird das Gelege 32 zwischen der Rolle 31 und dem Kern 30 von unten mit einem Bindemittel 33 über eine Bebinderungseinrichtung 37 benetzt. Es wird also auf der zweiten Seite 39 das Bindemittel 33 aufgetragen.

Alternativ zu den in Fig. 3a und Fig. 3b kann das Gelege bereits auf der Rolle mit einem Bindemittel versehen sein. Dann ist eine entsprechende Bebinderungseinrichtung nicht mehr notwendig. Zudem kann zusätzlich zu der Bebinderungseinrichtung oder statt der Bebinderungseinrichtung eine Wärmequelle wie ein Heizstrahler, Ofen o.ä. vorgesehen sein, durch den das Bindemittel verklebt und somit die Haftung der einzelnen Lagen verstärkt wird.

In einer weiteren Alternative kann das Bindemittel auf das Gelege auf der Rolle aufgetragen werden. Die Bebinderungseinrichtung ist dabei insbesondere direkt über der Rolle angeordnet.

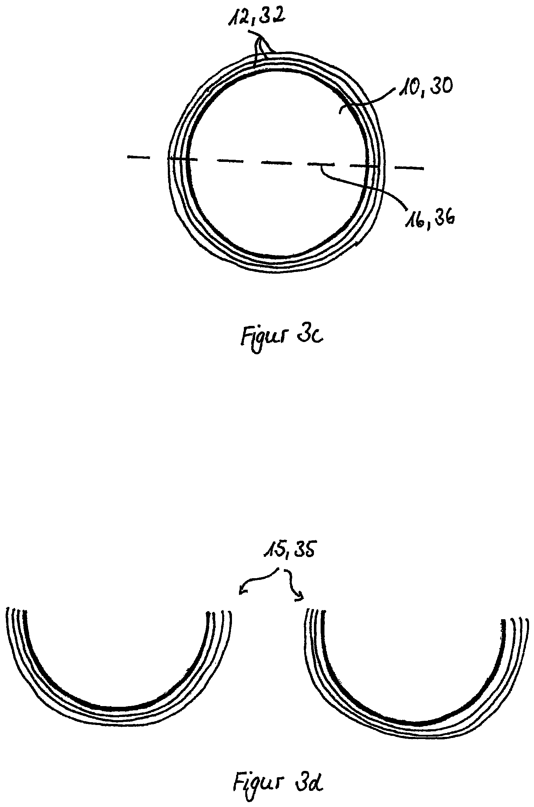

Fig. 3c zeigt einen zweiten Verfahrensschritt eines Verfahrens gemäß Fig. 3a oder Fig. 3b. In Fig. 3c ist der Kern 10, 30 zu erkennen. Auf dem Kern 10, 30 ist die für die herzustellende Preform vorbestimmte Anzahl an Lagen des Geleges 12, 32 erreicht. Die einzelnen Lagen haften dabei gut zusammen. Nach dem Drapieren des Geleges 12, 32 auf dem Kern 10, 30, wird das Gelege 12, 32, wenn es noch nicht mit einer Matrix versehen ist, mit einer solchen getränkt bzw. dieser Tränkungsvorgang kann auch zwischen dem Abrollen des Geleges 12, 32 von der Rolle 11, 31 auf den Kern 10, 30 erfolgen. Nach dem Drapieren und ggf. dem Tränken des Geleges mit einem Harz o.ä. werden die Gelege ausgehärtet. Nach dem Aushärten wird das Gelege mittig, also an der Mittellinie 16, 36 getrennt, so dass daraus zwei Preformen oder Vorformlinge 15, 35 entstehen wie sie in Figur 3d abgebildet sind. Die beiden Preformen oder Vorformlinge 15, 35 sind dabei als (Vorformling-)Halbschalen ausgeführt. Damit wird anschließend ein Rotorblatt oder ein Rotorblattelement hergestellt.

Der Kern kann sich optional in weniger als 25s und insbesondere in weniger als 9s einmal um seine Längsachse drehen.

Bei einem bereits vorher mit einer Matrix versehenen Halbzeug wird das Halbzeug, nachdem es auf dem Kern aufgewickelt ist, direkt ausgehärtet.

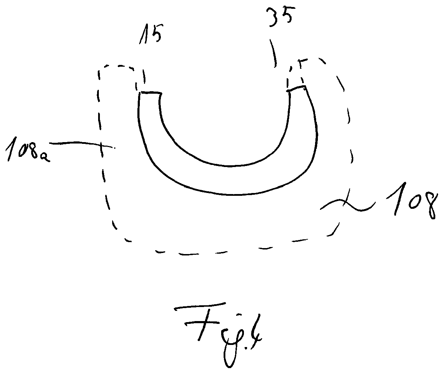

Fig. 4 zeigt eine schematische Schnittansicht eines Windenergieanlagen-Rotorblatts.

Eine Vorformling-Halbschale 15, 35 ist Teil der Struktur des Rotorblattes 108. Mit anderen Worten, die Vorformling-Halbschale 15, 35 ist in das Rotorblatt 108 integriert. Insbesondere ist eine Vorformling-Halbschale 15, 35 in eine Rotorblatt-Halbschale integriert.

Offenbarungsgemäß wird ein Windenergieanlagen-Rotorblatt hergestellt, wobei die beiden Vorformling-Halbschalen bei der Herstellung eines Windenergieanlagen-Rotorblattes verwendet werden.

Offenbarungsgemäß wird das Windenergieanlagen-Rotorblatt aus zwei Rotorblatt-Halbschalen zusammengesetzt, wobei in jeder der Halbschalen eine der beiden aufgetrennten Hälften des Vorformlings verwendet wird.

## Patentansprüche

1. Verfahren zum Herstellen eines Windenergieanlagen-Rotorblattes mit den Schritten:
Bereitstellen wenigstens eines trockenen Halbzeugs (12, 32) auf wenigstens einer Rolle (11, 31),
Aufbringen eines Bindemittels (13, 33) auf das textile Halbzeug (12, 32) und/oder Erwärmen des textilen Halbzeugs (12, 32),
Drapieren des wenigstens einen textilen Halbzeugs (12, 32) von der wenigstens einen Rolle (11, 31) auf einen Kern (10, 30) mittels einer Rotation des Kerns (10, 30),
Infundieren des drapierten textilen Halbzeugs mit Harz,
Aushärten des textilen Halbzeugs (12, 32) nach dem Infundieren mit Harz und dem Drapieren auf dem Kern (10, 30),
mittiges Trennen des drapierten ausgehärteten textilen Halbzeugs, um zwei ausgehärtete Vorformling-Halbschalen (15, 35) zu erhalten, wobei die beiden Vorformling-Halbschalen (15, 35) zur Herstellung eines Windenergieanlagen-Rotorblattes verwendet werden, indem sie in das Rotorblatt integriert werden.

2. Verfahren nach Anspruch 1, wobei
der Kern (10, 30) sich in weniger als 25s einmal um seine Längsachse dreht, insbesondere in weniger als 9s.

3. Verfahren nach Anspruch 1, wobei das textile Halbzeug (12, 32) eine erste von dem Kern abgewandte Seite und eine zweite zu dem Kern weisende Seite aufweist und die erste Seite und/oder die zweite Seite zwischen der Rolle (11, 31) und dem Kern (10, 30) mit dem Bindemittel (13, 33) benetzt wird.

4. Verfahren nach Anspruch 1 oder 2, wobei das Aufbringen des Bindemittels vor dem Bereitstellen des textilen Halbzeugs (12, 32) erfolgt.

5. Verfahren nach einem der vorstehenden Ansprüche, wobei das Trennen des Vorformlings (15, 35) mittig und nach dem Aushärten erfolgt.

6. Verfahren nach einem der vorstehenden Ansprüche, wobei das Drapieren des wenigstens einen textilen Halbzeugs (12, 32) mittels einer Bewegung zu einer Längsachse des Kerns (10, 30) durchgeführt wird.

7. Verfahren nach einem der vorstehenden Ansprüche, wobei vor dem Drapieren des textilen Halbzeugs (12, 32) von der Rolle (11, 31) auf den Kern (10, 30) eine Trennfolie, insbesondere eine Hostaphanfolie, auf den Kern (10, 30) angeordnet wird.

8. Verfahren nach einem der vorstehenden Ansprüche, wobei der Kern (10, 30) als ein ovaler länglicher Körper ausgeführt ist und durch einen Motor bewegt wird.

9. Verfahren nach einem der vorstehenden Ansprüche, wobei 2 bis 30 Rollen (11, 31), insbesondere 2 bis 4 Rollen (11, 31), verwendet werden und/oder wenigstens zwei textile Halbzeuge (12, 32) auf zwei Rollen (11, 31) eine unterschiedliche Faserorientierung aufweisen und/oder wenigstens zwei textile Halbzeuge (12, 32) in wenigstens einer unterschiedlichen Faserorientierung drapiert werden.

10. Verfahren nach einem der vorstehenden Ansprüche, wobei
auf das textile Halbzeug (12, 32) beim Drapieren auf den Kern (10, 30) eine Andrucckraft aufgebracht wird.

## Claims

1. Method for producing a wind energy converter rotor blade, comprising the steps:
providing at least one dry semifinished product (12, 32) on at least one roll (11, 31),
applying a binder (13, 33) onto the semifinished textile product (12, 32) and/or heating the semifinished textile product (12, 32),
draping the at least one semifinished textile product (12, 32) from the at least one roll (11, 31) onto a core (10, 30) by means of rotating the core (10, 30),
diffusing resin into the draped semifinished textile product,
curing the semifinished textile product (12, 32) after diffusing the resin in and draping on the core (10, 30),
separating the semifinished textile product, which has been draped and cured, in order to obtain two preform half-shells (15, 35), the two preform half-shells (15, 35) being used in order to produce a wind energy converter rotor blade by integrating them into the rotor blade centrally.

2. Method according to Claim 1, wherein
the core (10, 30) rotates once about its longitudinal axis in less than 25 s, particularly in less than 9 s.

3. Method according to Claim 1, wherein the semifinished textile product (12, 32) has a first side facing away from the core and a second side facing toward the core, and the first side and/or the second side is wetted with the binder (13, 33) between the roll (11, 31) and the core (10, 30).

4. Method according to Claim 1 or 2, wherein the application of the binder is carried out before the provision of the semifinished textile product (12, 32).

5. Method according to one of the preceding claims, wherein the separation of the preform (15, 35) is carried out centrally after the curing.

6. Method according to one of the preceding claims, wherein the draping of the at least one semifinished textile product (12, 32) is carried out by means of a movement towards a longitudinal axis of the core (10, 30).

7. Method according to one of the preceding claims, wherein a separating film, in particular a Hostaphan film, is arranged on the core (10, 30) before the draping of the semifinished textile product (12, 32) from the roll (11, 31) onto the core (10, 30).

8. Method according to one of the preceding claims, wherein the core (10, 30) is configured as an elongate oval body and is moved by a motor.

9. Method according to one of the preceding claims, wherein from 2 to 30 rolls (11, 31), in particular from 2 to 4 rolls (11, 31), are used and/or at least two semifinished textile products (12, 32) on two rolls (11, 31) have a different fibre orientation and/or at least two semifinished textile products (12, 32) are draped in at least one different fibre orientation.

10. Method according to one of the preceding claims, wherein
an application pressure is applied onto the semifinished textile product (12, 32) during the draping onto the core (10, 30).

## Revendications

1. Procédé pour fabriquer une pale de rotor d'éolienne avec les étapes :
de fourniture d'au moins un semi-produit sec (12, 32) sur au moins un rouleau (11, 31),
d'application d'un liant (13, 33) sur le semi-produit textile (12, 32) et/ou de chauffage du semi-produit textile (12, 32),
de drapage de l'au moins un semi-produit textile (12, 32) par l'au moins un rouleau (11, 31) sur un noyau (10, 30) au moyen d'une rotation du noyau (10, 30),
d'imprégnation du semi-produit textile drapé de résine,
de durcissement du semi-produit textile (12, 32) après l'imprégnation de résine et le drapage sur le noyau (10, 30),
de séparation au centre du semi-produit textile durci drapé pour obtenir deux demi-coques de préforme (15, 35) durcies, dans lequel les deux demi-coques de préforme (15, 35) sont utilisées pour fabriquer une pale de rotor d'éolienne, en ce qu'elles sont intégrées dans la pale de rotor.

2. Procédé selon la revendication 1, dans lequel le noyau (10, 30) tourne en moins de 25 s autour de son axe longitudinal, en particulier en moins de 9 s.

3. Procédé selon la revendication 1, dans lequel le semi-produit textile (12, 32) présente un premier côté opposé au noyau et un deuxième côté tourné vers le noyau et le premier côté et/ou le deuxième côté sont humidifiés d'un liant (13, 33) entre le rouleau (11, 31) et le noyau (10, 30).

4. Procédé selon la revendication 1 ou 2, dans lequel l'application du liant est effectuée avant la fourniture du semi-produit textile (12, 32).

5. Procédé selon l'une quelconque des revendications précédentes, dans lequel la séparation de la préforme (15, 35) est effectuée au centre et après le durcissement.

6. Procédé selon l'une quelconque des revendications précédentes, dans lequel le drapage de l'au moins un semi-produit textile (12, 32) est mis en œuvre au moyen d'un déplacement en direction d'un axe longitudinal du noyau (10, 30).

7. Procédé selon l'une quelconque des revendications précédentes, dans lequel un film de séparation, en particulier un film Hostaphan, est disposé sur le noyau (10, 30) avant le drapage du semi-produit textile (12, 32) par le rouleau (11, 31) sur le noyau (10, 30).

8. Procédé selon l'une quelconque des revendications précédentes, dans lequel le noyau (10, 30) est réalisé en tant qu'un corps allongé ovale et est déplacé par un moteur.

9. Procédé selon l'une quelconque des revendications précédentes, dans lequel 2 à 30 rouleaux (11, 31), en particulier 2 à 4 rouleaux (11, 31), sont utilisés et/ou au moins deux semi-produits textiles (12, 32) sur deux rouleaux (11, 31) présentent une orientation des fibres différente et/ou au moins deux semi-produits textiles (12, 32) sont drapés selon au moins une orientation des fibres différente.

10. Procédé selon l'une quelconque des revendications précédentes, dans lequel
une force de pression est appliquée sur le semi-produit textile (12, 32) lors du drapage sur le noyau (10, 30).
